# EUROPEAN PATENT APPLICATION

(11) **EP 2 161 916 A1**
(43) Date of publication of application: **10.03.2010**
(21) Application number: 08777737.1
(22) Date of filing: 01.07.2008
(51) Int. Cl.: H04N 1/46, G06T 1/00, H04N 1/60

(54) **COLOR-RENDERING INDEX DEVICE**

(30) Priority: 03.07.2007 JP 2007174872; 01.11.2007 JP 2007285267
(71) Applicant: Sony Corporation, Tokyo 108-0075 (JP)
(72) Inventor: HAGA, Shuichi, Tokyo 108-0075 (JP); NAKATSUE, Takehiro, Tokyo 108-0075 (JP); SHIMPUKU, Yoshihide, Tokyo 108-0075 (JP)
(74) Representative: Müller - Hoffmann & Partner
(86) International application number: PCT/JP2008/061886
(87) International publication number: WO 2009/005049

(57) **Abstract**

A color-rendering index device consuming less overall power than that in related art as well as allowing luminance variations in a color of light to be emitted in an emission surface to be reduced is provided. A reflective sheet 214 and a shielding plate 212 are arranged in each light box 21. A color of light emitted from a single-color LED 211 in the light box 21 is diffused to be emitted from an emission surface S1. Thereby, luminance variations in the color of light in the emission surface S1 are reduced. Moreover, the wavelength regions of colors of light emitted from the light boxes 21 correspond to different colors from one another. In the case where a color of light in a wavelength region corresponding to one color among a plurality of colors is emitted, it is only necessary for only a single-color LED 211 emitting a corresponding color of light to illuminate. Thereby, the overall power consumption of the device is reduced.

## Description

### TECHNICAL FIELD

The present invention relates to a color-rendering index device used for a color data correction process and for defining color standards for a plurality of colors.

### BACKGROUND ART

Electronic color-rendering index devices as color charts for defming color standards for a plurality of colors have been heretofore developed, and a color data correction process using such an electronic color-rendering index device is performed. However, in related art, as a color reproduction range on a side where a plurality of colors are outputted (a display) is narrow (for example, the color reproduction range is restricted to the sRBG gamut defined by IEC (International Electro-technical Commission)), the color reproduction range of the electronic color-rendering index device is also narrow accordingly.

However, recently, a display having a color reproduction range exceeding the sRGB gamut is being developed, so the development of an electronic color-rendering index device with a wide color reproduction range used for such a display with a wide color reproduction range or the like is desired.

Therefore, for example, Patent Documents 1 and 2 propose a color-rendering index device allowing an expansion in its color reproduction range by using light emitting diode (LED) light sources of a plurality of primary colors.

[Patent Document 1] Japanese Patent No. 3790693
[Patent Document 2] Japanese Unexamined Patent Application Publication No. 2003-143417

### DISCLOSURE OF THE INVENTION

In the above-described Patent Documents 1 and 2, colors of light emitted from LED light sources of a plurality of primary colors, respectively, are mixed with one another in an optical path, and the mixture ratio of the colors is changed, thereby a color of light in a wavelength region corresponding to a desired color is emitted.

However, in the case where colors of light from a plurality of LED light sources are mixed in such a manner, it is necessary for the plurality of LED light sources to illuminate simultaneously, so in the case where a color of light in a wavelength region corresponding to a desired color is to obtained, the overall power consumption of the color-rendering index device is increased. Moreover, in the above-described configuration, only one light emission surface is present, so a plurality of colors are not allowed to be emitted simultaneously.

In addition, apart from such an issue, in the case where the color-rendering index device is configured of point light sources such as LEDs, luminance variations or the like occur in an emission surface due to the directivity of the light sources.

The present invention is made to solve the above-described issues, and it is an object of the invention to provide a color-rendering index device consuming less overall power than that in related art as well as allowing luminance variations in a color of light to be emitted in an emission surface to be reduced.

A color-rendering index device of the invention is for defining color standards for a plurality of colors, and includes a plurality of first light emission sections emitting colors of light in wavelength regions corresponding to the plurality of colors. In this case, the first light emission sections each include an enclosure having an emission surface, a single-color light source arranged in the enclosure so as to face the emission surface, and emitting the color of light, a reflective sheet formed on an end surface except for the emission surface in the enclosure, and a shielding plate arranged between the single-color light source and the emission surface so as to face the emission surface, and interrupting the color of light emitted from the single-color light source. Moreover, the wavelength regions of the colors of light emitted from the first light emission sections correspond to different colors from one another.

In the color-rendering index device of the invention, in each of the first light emission sections, the color of light emitted from the single-color light source is reflected and diffused by the shielding plate, and then is reflected by the reflective sheet on an end surface except for the emission surface to be emitted from the emission surface. That is, unlike related art in which the shielding plate is not arranged, the color of light is diffused to be emitted from the emission surface. Moreover, the wavelength regions of the colors of light emitted from the first light emission sections correspond to different colors from one another, so in the case where a color of light in a wavelength region corresponding to one color among the plurality of colors is emitted, unlike related art, among the plurality of single-color light sources, only a single-color light source emitting a corresponding color of light illuminates.

The color-rendering index device of the invention may further include a plurality of second light emission sections emitting half-tone light with a plurality of luminance levels in a wavelength region corresponding to one color. In this case, the second light emission sections each include the above-described enclosure, a light source arranged so as to face the emission surface in the enclosure, and emitting the half-tone light, the above-described reflective sheet, a shielding plate arranged between the light source and the emission surface so as to face the emission surface, and interrupting the half-tone light emitted from the light source, and a luminance adjustment filter for adjusting the luminance level of the half-tone light emitted from the light source. Moreover, the luminance levels of half-tone light emitted from the second light emission sections are different from one another. In the case where the color-rendering index device has such a configuration, in each of the second light emission sections, half-tone light emitted from the light source is reflected and diffused by the shielding plate, and then is reflected by the reflective sheet on an end surface except for the emission surface to be emitted from the emission surface. At this time, the luminance level of the half-tone light is adjusted by the luminance adjustment filter. Further, the luminance levels of half-tone light emitted from the second light emission sections are different from one another, so while the above-described first light emission sections function as color standards for a plurality of colors, the second light emission sections function as gray-scale standards for a plurality of luminance levels.

According to the color-rendering index device of the invention, the reflective sheet and the shielding pate are arranged in each of the first light emission sections, so unlike related art, the color of light emitted from the single-color light source in each of the first light emission sections is allowed to be diffused and then emitted from the emission surface, and luminance variations in the color of light in the emission surface are allowed to be reduced. Moreover, the wavelength regions of colors of light emitted from the first light emission sections correspond to different colors from one another, so in the case where a color of light in a wavelength region corresponding to one color among the plurality of colors is emitted, it is only necessary for only a single-color light source emitting a corresponding color of light to illuminate, and compared to related art, the overall power consumption of the color-rendering index device is allowed to be reduced. Therefore, the color-rendering index device consumes less overall power than that in related art, as well as allows luminance variations in the color of light to be emitted in the emission surface to be reduced.

In particular, in the case where the second light emission sections including the luminance adjustment filter are arranged, and the luminance levels of half-tone light emitted from the second light emission sections are different from one another by the luminance adjustment filter, the above-described first light emission sections are allowed to function as color standards for a plurality of colors, and the second light emission sections are allowed to function as gray-scale standards for a plurality of luminance levels. Therefore, the color-rendering index device of the invention is applicable to not only evaluation of color reproduction characteristics but also evaluation of black-white gray-scale characteristics.

### BRIEF DESCRIPTION OF THE DRAWINGS

[FIG. 1] FIG. 1 is a block diagram illustrating the whole configuration of a color data correction system using a color-rendering index device according to an embodiment of the invention.
[FIG. 2] FIG. 2 is a front view and a side view illustrating the configuration of a main part of the color-rendering index device illustrated in FIG. 1.
[FIG. 3] FIG. 3 is characteristic diagrams illustrating chromaticity points of standard colors in the color-rendering index device of the embodiment and a color-rendering index device in related art.
[FIG. 4] FIG. 4 is a characteristic diagram illustrating an example of spectral characteristics of light emitting diodes of standard colors.
[FIG. 5] FIG. 5 is a perspective view illustrating a configuration of a main part of a light box illustrated in FIG. 2.
[FIG. 6] FIG. 6 is a sectional view illustrating a configuration of the main part of the light box illustrated in FIG. 2.
[FIG. 7] FIG. 7 is a flow chart illustrating an example of a color data correction process in an input section.
[FIG. 8] FIG. 8 is a flow chart illustrating an example of a color data correction process in an output section.
[FIG. 9] FIG. 9 is sectional views for describing functions of light boxes according to the embodiment and a comparative example.
[FIG. 10] FIG. 10 is schematic views for describing in-plane variations in luminance of emission light from the light boxes according to the embodiment and the comparative example.
[FIG. 11] FIG. 11 is illustrations for describing conditions for measuring emission light in an example and a comparative example.
[FIG. 12] FIG. 12 is a sectional view illustrating a configuration example of a main part of a light box in a color-rendering index device according to Modification Example 1 of the invention.
[FIG. 13] FIG. 13 is a characteristic diagram illustrating wavelength selective transmission characteristics of a wavelength selective filter illustrated in FIG. 12.
[FIG. 14] FIG. 14 is a characteristic diagram illustrating chromaticity points of standard colors according to Modification Example 1.
[FIG. 15] FIG. 15 is a front view illustrating a configuration example of a main part of a color-rendering index device according to Modification Example 2 of the invention.
[FIG. 16] FIG. 16 is a sectional view illustrating a configuration example of a main part of a light box according to Modification Example 2.
[FIG. 17] FIG. 17 is characteristic diagrams illustrating luminance characteristics of emission light from light boxes according to Modification Example 2.
[FIG. 18] FIG. 18 is a characteristic diagram illustrating spectral characteristics of emission light from the light boxes according to Modification Example 2.
[FIG. 19] FIG. 19 is characteristic diagrams illustrating chromaticity points of standard colors in Modification Example 2 and a comparative example.

### BEST MODE(S) FOR CARRYING OUT THE INVENTION

A best mode for carrying out the invention (hereinafter simply referred to as "embodiment") will be described in detail below referring to the accompanying drawings.

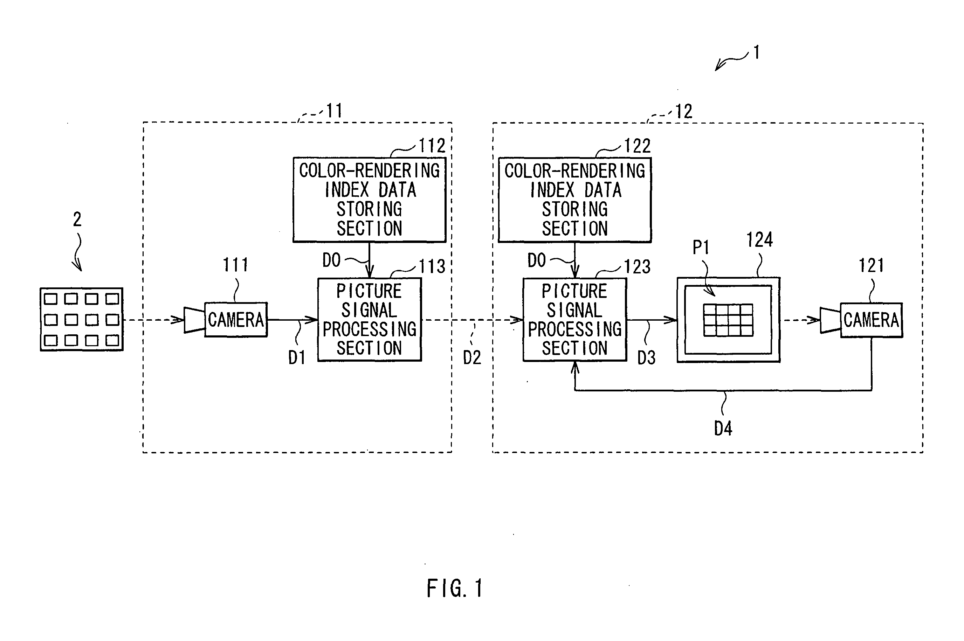

FIG. 1 illustrates the whole block configuration of a color data correction system 1 using a color-rendering index device (a color-rendering index device 2) according to an embodiment of the invention. The color data correction system 1 includes the color-rendering index device 2, an input section 11 and an output section 12.

The color-rendering index device 2 defines color standards for a plurality of colors, and emits a plurality of colors of light in wavelength regions corresponding to the plurality of colors. In addition, a specific configuration of the color-rendering index device 2 will be described later.

The input section 11 includes a camera 111 receiving colored light emitted from the color-rendering index device 2 (picking up an image of a light emission part in the color-rendering index device 2), and then outputting corresponding RGB data D1, a color chart data storing section 112 storing, in advance, R'G'B' data (color chart data D0) of a plurality of color standards corresponding to the colors of light emitted from the color-rendering index device 2, a picture signal processing section 113 performing, in a given case, a color data correction process on the RGB data D1 based on the RGB data D1 and the color chart data D0, and then outputting corrected data (Y'C' data D2). In addition, the picture signal processing section 113 will be described in detail later.

The output section 12 includes a color chart data storing section 122 storing the color chart data D0 in advance as in the case of the color chart data storing section 112, a picture signal processing section 123 performing predetermined image signal processing on the Y'C' data D2 supplied from the picture signal processing section 113, and then outputting processed data (RGB data D3), a display (for example, a liquid crystal display) 124 displaying a picture P1 of the color standards of the color-rendering index device 2 based on the RGB data D3, and a camera 121 picking up the picture P1 of the color standards displayed on the display 124 (receiving display light corresponding to each of the color standards), and then outputting corresponding RGB data D4. Moreover, the picture signal processing section 123 also has a function of changing a correction coefficient in a correction process from the Y'C' data D2 to the RGB data D3 based on the RGB data D4 and the color chart data D0 in a given case. In addition, the picture signal processing section 123 will be described in detail later.

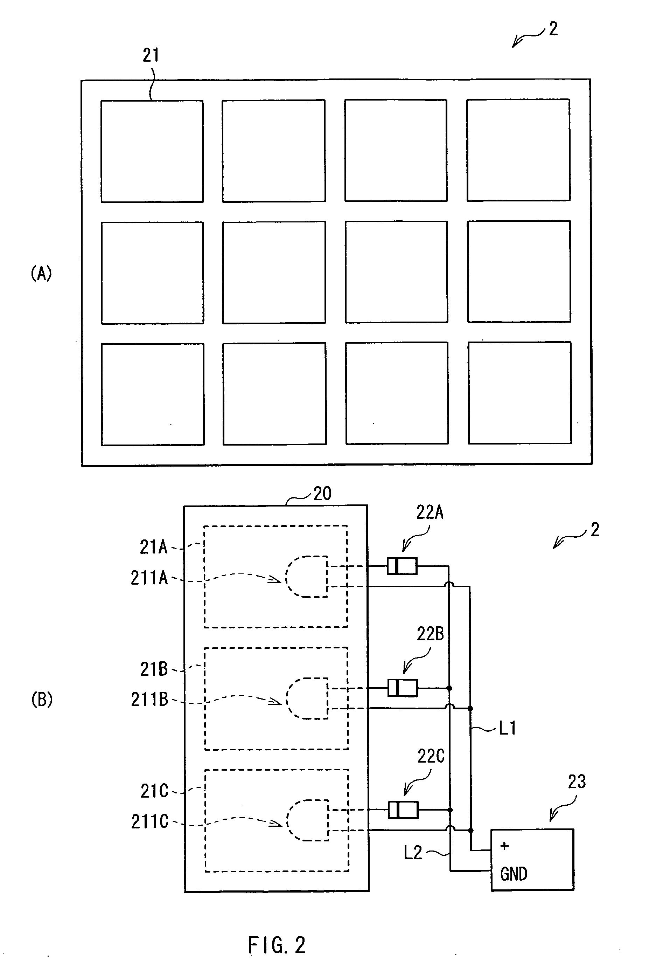

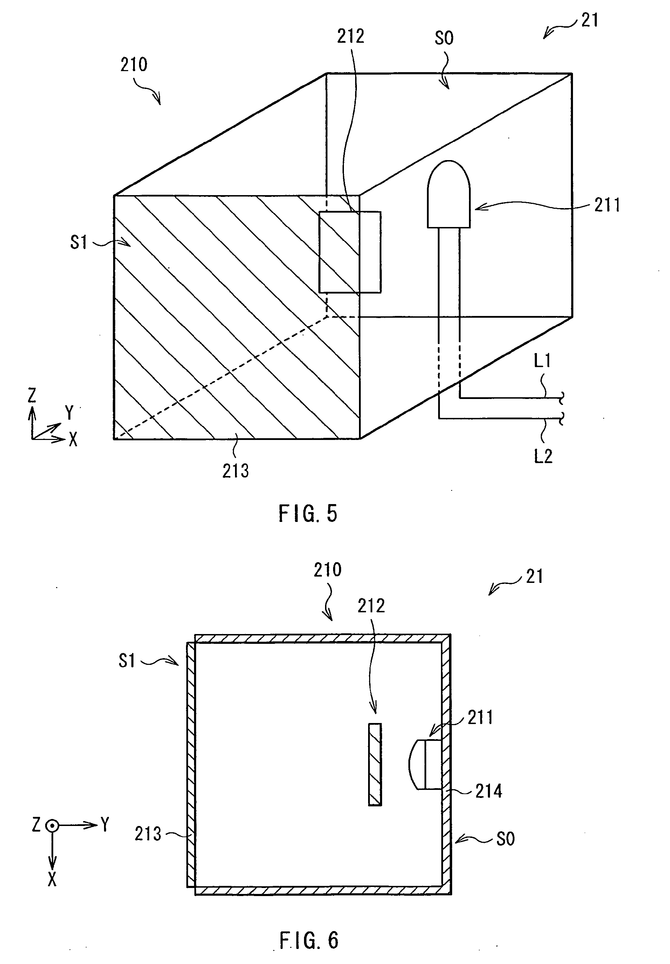

Next, referring to FIGs. 2 to 6, the specific configuration of the color-rendering index device 2 of the embodiment will be described below. In this case, FIG. 2(A) illustrates a front configuration example of the color-rendering index device 2, and FIG. 2(B) illustrates a side configuration example of the color-rendering index device 2. Moreover, FIG. 5 illustrates a perspective configuration example of a light emission section (a light box 21 which will be described later) in the color-rendering index device 2, and FIG. 6 illustrates a sectional (X-Y sectional) configuration example of the color-rendering index device 2.

In the color-rendering index device 2, as illustrated in FIG. 2(A), a plurality of (12 in this case) light boxes 21 which emit colors of light in wavelength regions corresponding to a plurality of colors as color standards are arranged in a matrix form (in this case, a matrix of 3 rows and 4 columns). Moreover, for example, as in the case of light boxes 21A to 21C illustrated in FIG. 2(B), single-color LEDs 211A to 211C as light sources of colors are arranged in the light boxes 21, respectively. One end of each of the light boxes 21A to 21C is connected to a cathode output terminal ("+") of a DC power supply 23C through a connection line L1, and the other ends of the light boxes 21 A to 21C are connected to a ground ("GND") of the DC power supply 23 through constant-current diodes 22A to 22C, respectively, and a wiring line L2. Such a configuration allows the single-color LEDs 211 A to 211C to illuminate in response to a DC voltage supplied from the DC power supply 23 and emit colors of light. In addition, the light boxes 21 correspond to a specific example of "first light emission sections" in the invention.

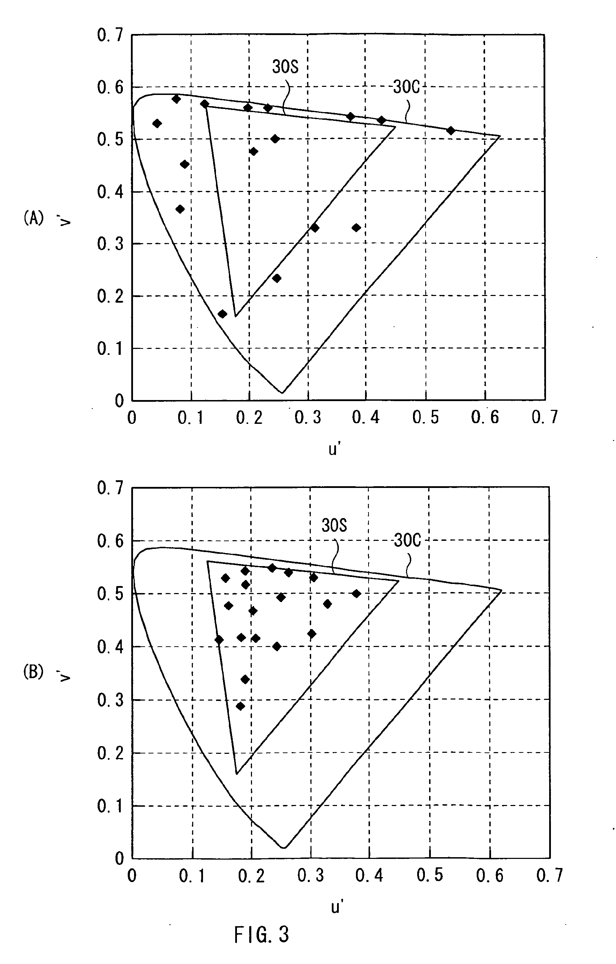

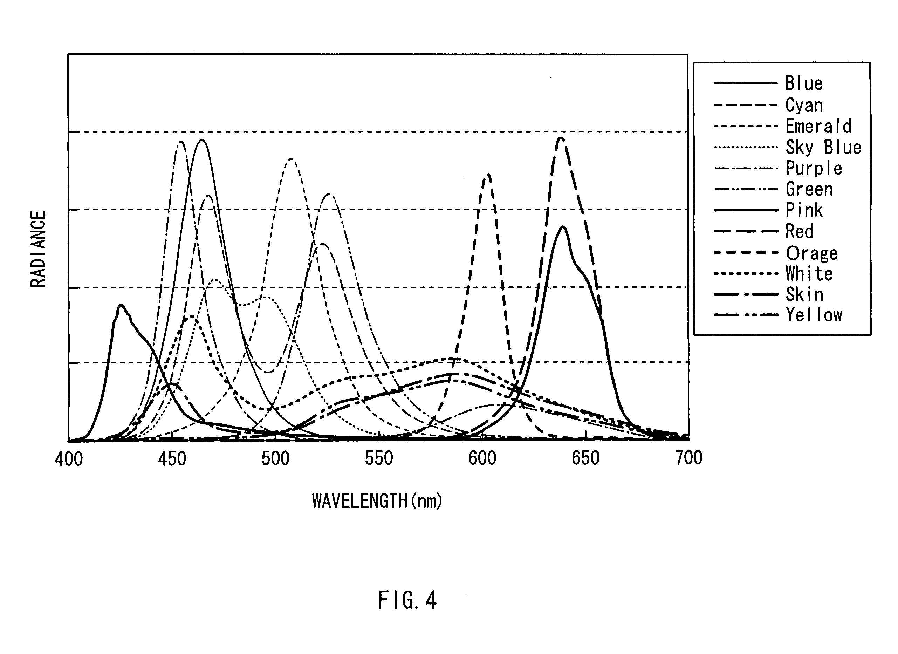

As is evident from, for example, a chromaticity diagram (a u'-x' chromaticity diagram) in FIG. 3(A) or emission spectral characteristics in FIG. 4, the wavelength regions of colors of light emitted from the light boxes 21 correspond to colors as the color standards, respectively, which are different from one another. Moreover, as is evident from FIG. 3(A), chromaticity points of colors of light except for some chromaticity points are plotted outside an sRGB gamut 30s. In other words, for example, unlike the positions of chromaticity points of colors of light emitted from light boxes of a color-rendering index device in related art (all chromaticity points are plotted within the sRGB gamut 30s) illustrated in FIG. 3(B), most of chromaticity points are plotted outside the sRGB gamut. Thereby, the color-rendering index device 2 has a wider gamut of colors of light to be emitted than that in related art. In addition, in FIGs. 3(A) and 3(B), the gamut indicated by a reference numeral 30C indicates a CIE (Commission Internationale de l'Eclairage) gamut.

For example, as illustrated in FIGs. 5 and 6, each light box 21 has a configuration in which a single-color LED (a single-color light source) 211 and a shielding plate 212 are contained in an enclosure 210 having quadrilateral (rectangular or square) end surfaces. The single-color LED 211 is arranged on one end surface (in this case, an end surface 50) in the enclosure 210 so as to face an emission surface S1 which will be described later. Moreover, while a diffuser plate 213 is formed all over the emission surface S1 (which is an end surface
where each color of light is emitted, and faces the end surface S0) of the enclosure 210, a reflective sheet 214 is formed all over end surfaces except for the emission surface S1 in the enclosure 210.

The shielding plate 212 is arranged between the single-color LED 211 and the emission surface S1 so as to face the emission surface S1. The shielding plate 212 reflects and diffuses a color of light emitted from the single-color LED 211 so as to interrupt the progress of the color of light toward the emission surface S 1, and is made of, for example, a material such as white polypropylene (PP). In addition, the thickness of the shielding plate 212 is approximately 100 to 500 µm.

The reflective sheet 214 reflects, again, the color of light reflected and diffused by the shielding plate 212 to guide the color of light toward the emission surface S1, and is made of, for example, a material such as white polyethylene terephthalate (PET). In addition, the thickness of the reflective sheet 214 is approximately 100 to 500 µm.

The diffuser plate 213 diffuses the color of light having reached the emission surface S1 to emit the color of light, and is made of, for example, a material such as polycarbonate. The thickness of the diffuser plate 213 is approximately 3 to 5 µm. Thereby, the color of light is diffused to be emitted from each light box 21, so the color of light becomes uniform light.

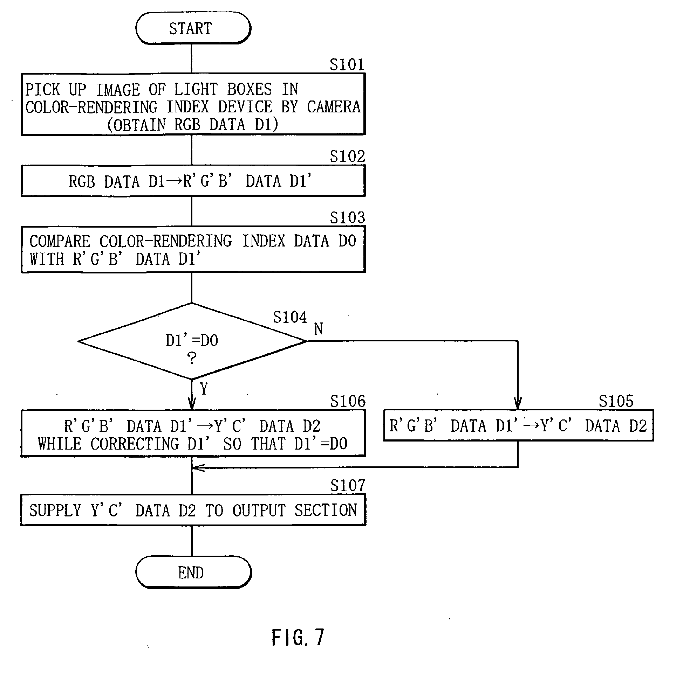

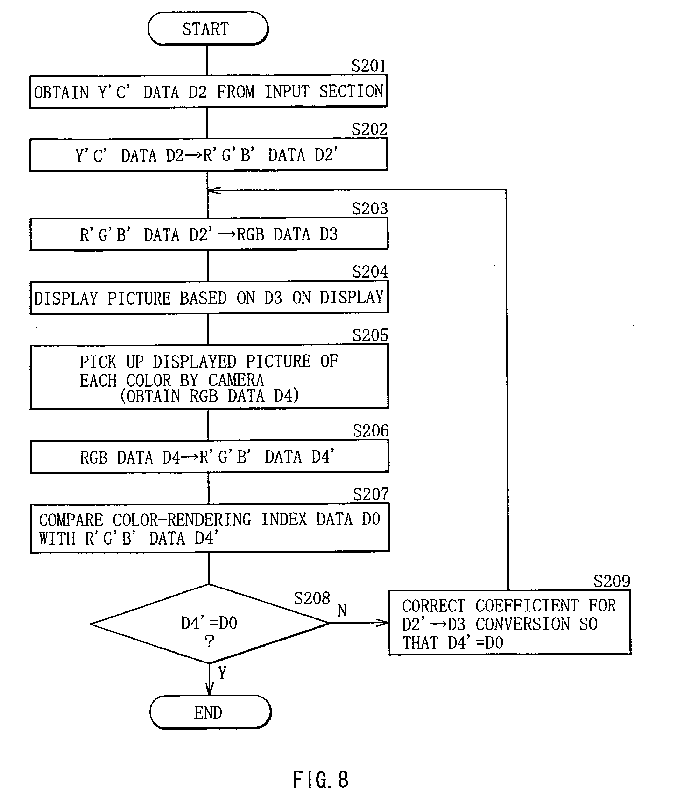

Next, the whole operation (a color data correction process) of the color data correction system 1 with the above-described configuration will be described below. Now, FIG 7 illustrates a color data correction process in the input section 11 with a flow chart, and FIG. 8 illustrates a color data correction process in the output section 12 with a flow chart.

First, in the input section 11, when an image of the light boxes 21 in the color-rendering index device 2 is picked up by the camera 111 (colors of light emitted from the light boxes 21 are received by the camera 111), corresponding RGB data D1 is supplied from the camera 111 to the picture signal processing section 113 (the RGB data D1 is obtained) (step S101 in FIG. 7).

Next, in the picture signal processing section 113, the supplied RGB data D1 is converted into R'G'B' data D1' (not illustrated in FIG. 1) (step S102), and the R'G'B' data D1' obtained by conversion is compared to the color chart data D0 stored in the color chart data storing section 112 (step S103). More specifically, whether or not the R'G'B' data D1' corresponds to the color chart data D0 is determined (step S104).

In the case where it is determined that the R'G'B' data D1' corresponds to the color chart data D0 (step S104: Y), the picture signal processing section 113 converts the R'G'B' data D1' into Y'C' data D2 without correcting the R'G'B' data D1' (step S105), and the Y'C' data D2 obtained by conversion is supplied to the output section 12 (step S107).

On the other hand, in the case where it is determined that R'G'B' data D1' does not correspond to the color chart data D0 (step S104: N), the picture signal processing section 113 converts the R'G'B' data D1' into Y'C' data D2 while correcting the R'G'B' data D1' so that the R'G'B' data D1' correspond to the color chart data D0 (step S106), and the Y'C' data D2 obtained by conversion is supplied to the output section 12 (step S 107).

Thus, in the input section 11, the color data correction process is performed so that data (color data) of a color of light from each of the light boxes 21 obtained by the camera 111 corresponds to color data of the color chart data D0 stored in advance.

On the other hand, in the output section 12, first, when the picture signal processing section 123 obtains the Y'C' data D2 from the picture signal processing section 113 in the input section 11 (step S201 in FIG. 8), the picture signal processing section 123 converts the Y'C' data D2 into R'G'B' data D2' (not illustrated in FIG. 1) (step S202), and then further converts the R'G'B' data D2' into RGB data D3 (step S203).

Next, the RGB data D3 obtained by such conversion is supplied to the display 124, and a picture (the picture P1 of the color standards of the color-rendering index device 2) based on the RGB data D3 is displayed on the display124 (step S204). Then, the picture P1 is picked up by the camera 121 (display light corresponding to each of the color standards is received by the camera 121), and corresponding RGB data D4 is supplied to the picture signal processing section 123 (the RGB data D4 is obtained) (step S205).

Next, in the picture signal processing section 123, the supplied RGB data D4 is converted into R'G'B' data D4' (not illustrated in FIG. 1) (step S206), and the R'G'B' data D4' obtained by conversion is compared to the color chart data D0 stored in the color chart data storing section 122 (step S207). More specifically, whether or not the R'G'B' data D4' corresponds to the color chart data D0 is determined (step S208).

In the case where it is determined that the R'G'B' data D4' corresponds to the color chart data D0 (step S208: Y), the picture signal processing section 123 does not correct a coefficient for conversion from the R'G'B' data D2' to the Y'C' data D2, thereby the color data correction process is completed.

On the other hand, in the case where it is determined that the R'G'B' data D4' does not correspond to the color chart data D0 (step S208: N), the picture signal processing section 123 corrects the coefficient for conversion from the R'G'B' data D2' to the Y'C' data D2 so that the R'G'B' data D4' corresponds to the color chart data D0 (step S209). In addition, after that, the process returns to the step S203, and a process from the step S203 to the step S209 is repeated until the R'G'B' data D4' corresponds to the color chart data D0.

Thus, in the output section 12, the color data correction process is performed so that color data of the picture P1, which is displayed on the display 124, of the color standards obtained by the camera 121 corresponds to color data of the color chart data D0 stored in advance.

Now, in the color-rendering index device 2 of the embodiment, wavelength regions of colors of light emitted from the light boxes 21 correspond to different colors from one another, respectively, so in the case where a color of light in a wavelength region corresponding to one color among a plurality of colors as color standards is emitted, unlike related art, among a plurality of single-color light sources (single-color LEDs 211), only a single-color light source emitting a corresponding color of light illuminates. On the other hand, in a color-rendering index device in related art in which a color of light in a wavelength region corresponding to a desired color is obtained by mixing colors of light emitted from a plurality of single-color LEDs, it is necessary for the plurality of single-color LEDs to illuminate simultaneously, so in the case where a color of light in a wavelength region corresponding to one color among a plurality of colors as color standards is obtained, the overall power consumption of the color-rendering index device is increased.

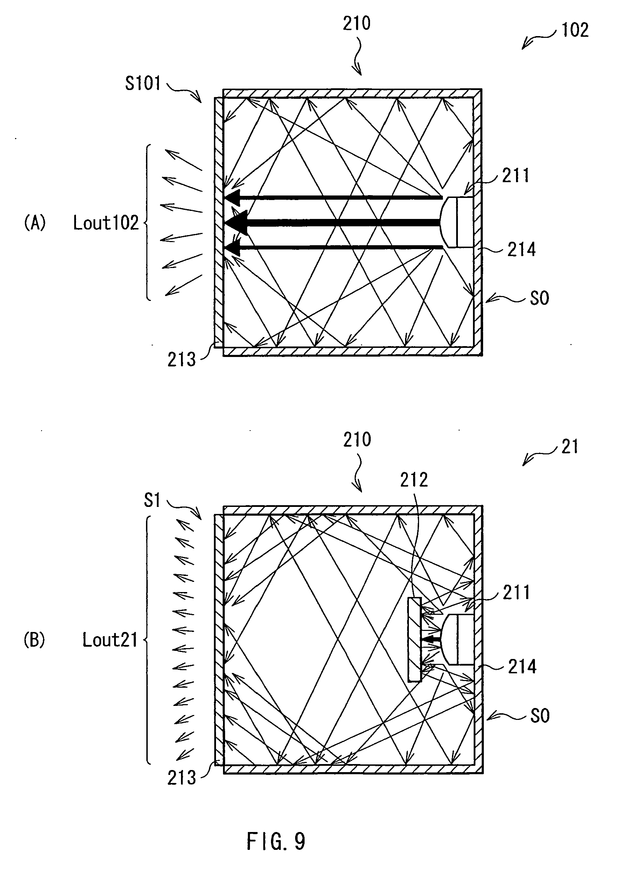

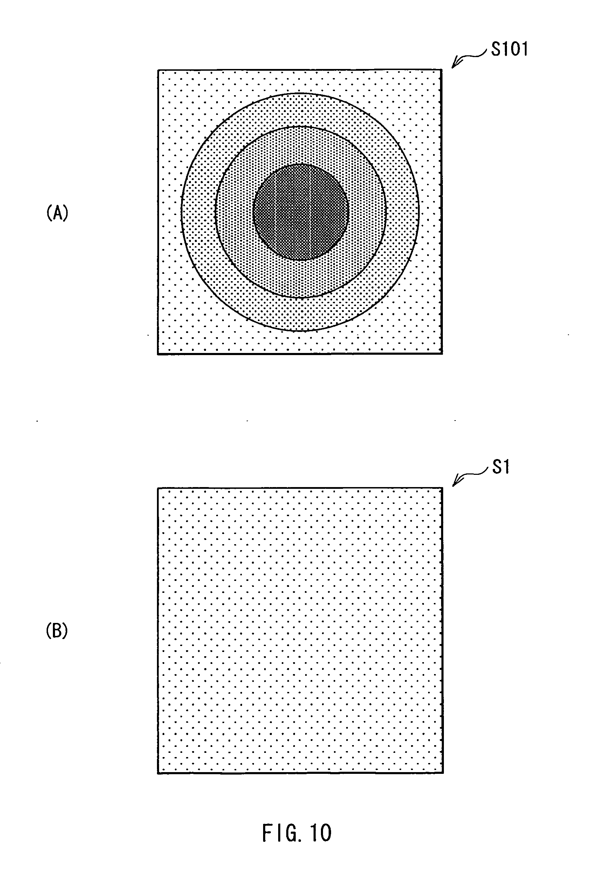

Next, referring to FIG. 9 and FIG. 10, functions of each of the light boxes 21 of the color-rendering index device 2 of the embodiment will be described below, compared to a comparative example (in which a shielding plate is not arranged in each light box). FIG. 9(A) illustrates a sectional configuration of an optical path of a color of light in a light box 102 according to the comparative example, and FIG. 9(B) illustrates a sectional configuration of an optical path of a color of light in the light box 21 in the embodiment.

In the light box 102 according to the comparative example illustrated in FIG. 9(A), the color of light emitted from the single-color LED 211 is diffused to some extent, and the color of light is reflected by the reflective sheet 214 to reach an emission surface S101, and then the color of light is emitted from the light box 102 as emission light Lout102. However, the light amount of the color of light which is not reflected by the reflective sheet 214 and travels in straight lines to reach the emission surface S101 is large due to the directivity or the like of the color of light emitted from the single-color LED 211, so, for example, as illustrated in FIG.
FIG. 10(A), luminance variations in the emission light Lout102 in the emission surface S101 occur.

On the other hand, in the light box 21 in the embodiment illustrated in FIG. 9(B), the shielding plate 212 is arranged between the single-color LED 211 and the emission surface S1, so a color of light emitted from the single-color LED 211 is reflected and diffused by the shielding plate 212, and then is reflected by the reflective sheet 214 on a surface except for the emission surface S1, and the color of light is emitted from the emission surface S1 as emission light Lout21. In other words, unlike the comparative example in which the shielding plate 212 is not arranged, the color of light is diffused, and then is emitted from the emission surface S1. Therefore, for example, as illustrated in FIG. 10(B), luminance variations in the emission light Lout21 in the emission surface S1 are reduced.

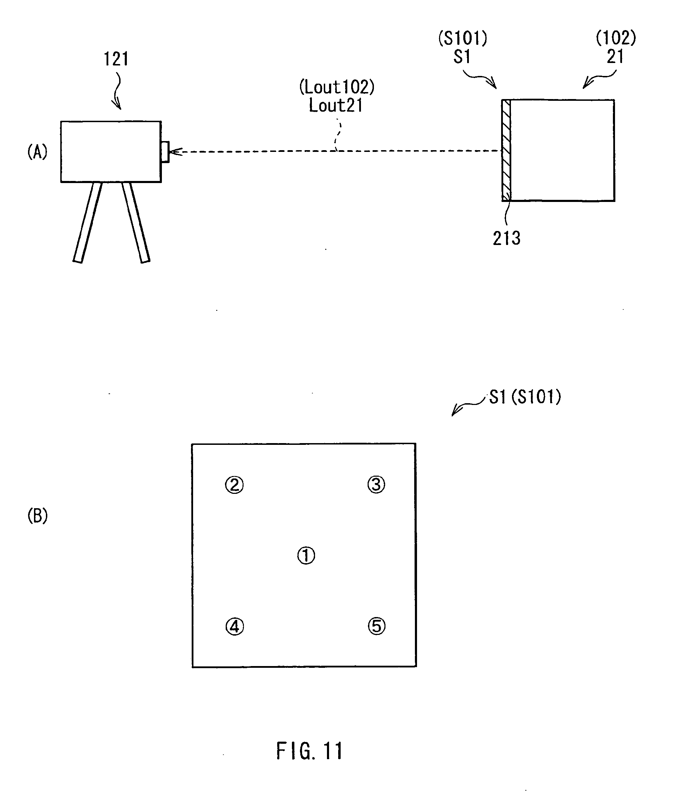

Now, FIG. 11 illustrates an example of a method of measuring the luminances of emission light (a color of light) Lout21 according to a specific example and the emission light (a color of light) Lout102 according to the comparative example for evaluating the degrees (ΔE*ab) of luminance variations in the emission light Lout21 and emission light Lout1. More specifically, as illustrated in FIG. 11(A), the colors light Lout21 and Lout102 emitted from the emission surfaces S1 and S101 of the light boxes 21 and 102, respectively, are received (color-measured) by the camera 121, and 5 color measurement points in the emission surfaces S1 and S10 are set as illustrated in FIG. 11 (B). Moreover, Table 1 illustrates values of ΔE*ab of the colors of light in the example and the comparative example and average values thereof (average values of ΔE*ab of the colors of light)

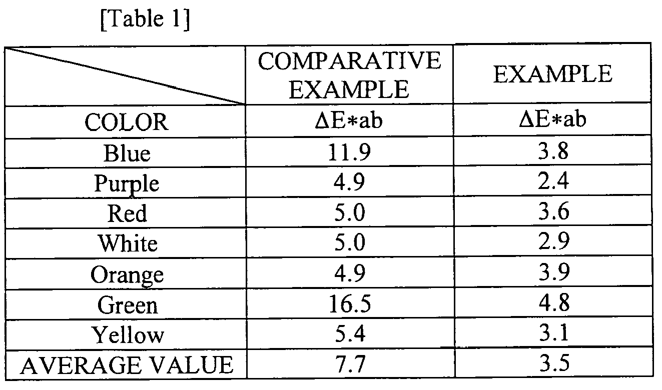

It is obvious from Table 1 that in the example in which the shielding plate 212 is arranged in the light box 21, the value of ΔE*ab of each color of light is smaller than that in the comparative example in which the shielding plate is not arranged in the light box 102, so luminance variations in each color of light emitted from each of light boxes in the emission surface are reduced. Moreover, it is obvious that such a reduction in variations is remarkable in blue and green. Thereby, it is obvious that the average value of ΔE*ab of the colors of light in the example is smaller than that in the comparative example, and luminance variations in the color of light emitted from each of the light boxes in the emission surface are 5% or less (more specifically 3.5%).

As described above, in the embodiment, the reflective sheet 214 and the shielding plate 212 are arranged in each light box 21, so unlike related art, the color of light emitted from the single-color LED 211 in each light box 21 is allowed to be diffused and then emitted from the emission surface S1, and luminance variations in the color of light in the emission surface S1 are allowed to be reduced. Moreover, the wavelength regions of the colors of light emitted from the light boxes 21 correspond to different colors from one another, respectively, so when a color of light in a wavelength region corresponding to one color among a plurality of colors is emitted, it is only necessary for only a single-color LED 211 emitting a corresponding color of light to illuminate, thereby, the color-rendering index device is allowed to consume less overall power than that in related art. Therefore, the color-rendering index device consumes less overall power than that in related art, as well as allows luminance variations in the color of light to be emitted in the emission surface to be reduced.

Moreover, the diffuser plate 213 diffusing the color of light is arranged on the emission surface S1 of the enclosure 210, so in the case where the emission light Lout21 is emitted from the emission surface S1, the emission light Lout21 is allowed to be further diffused. Therefore, a further reduction in luminance variations in the emission surface S1 and an improvement in viewing angle characteristics are allowed.

### [Modification Example 1]

Next, Modification Example 1 of the color-rendering index device of the invention will be described below. In addition, like components are denoted by like numerals as of the above-described embodiment and will not be further described.

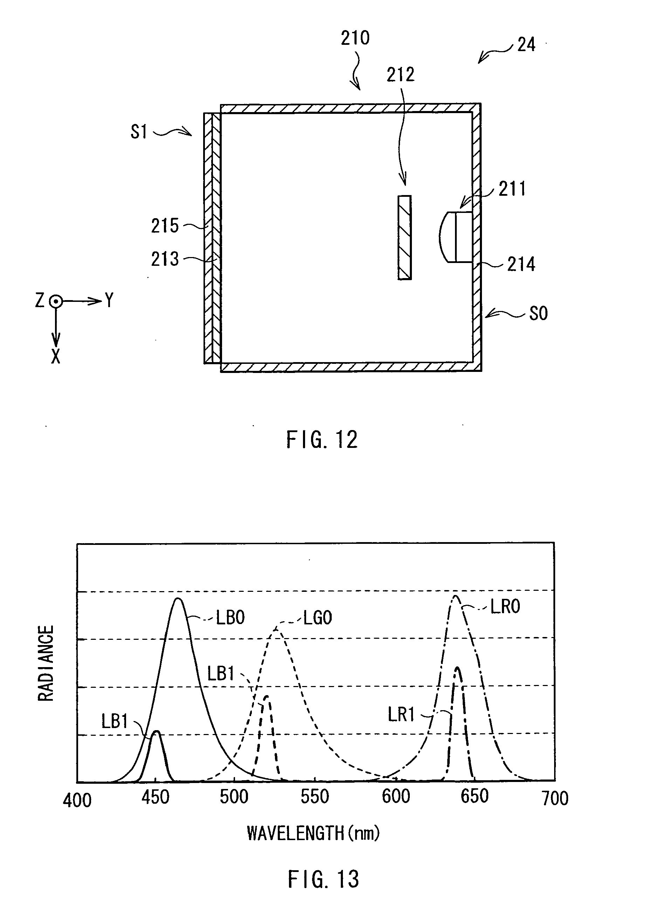

FIG. 12 illustrates a sectional configuration of a light box (a light box 24) in a color-rendering index device according to the modification example. The light box 24 is configured by further arranging a wavelength selective filter 215 on the diffuser plate 213 on the emission surface S1 in the light box 21 of the above-described embodiment.

The wavelength selective filter 215 is configured of, for example, an optical thin film (not illustrated) in which high refractive index layers and low refractive index layers are alternately arranged, and in this case, the lowermost layer and the uppermost layer of the optical thin film are configured of high refractive index layers. Moreover, a layer configuration in the wavelength selective filter 215 may be a configuration including an odd number of layers such as a five-layer configuration or a nine-layer configuration. These high refractive index layers and these low refractive index layers are formable by a dry process or a wet process. In the case of the dry process, the layers are formable by, for example, a sputtering method or an evaporation method. In this case, the high refractive index layers are configured so as to include, for example, a layer made of a titanium oxide such as TiO₂ (with a refractive index of 2.38), an niobium oxide such as Nb₂O₅ (with a refractive index of 2.28), or a tantalum oxide such as Ta₂O₅ (with a refractive index of 2.10), and the low refractive index layers are configured so as to include, for example, a layer made of a silicon oxide such as SiO₂ (with a refractive index of 1.46), or a magnesium fluoride such as MgF₂ (with a refractive index of 1.38). On the other hand, in the case of the wet process, the layers are formable by, for example, a spin coating method or a dip coating method. In this case, the high refractive index layers and the low refractive index layers are made of, for example, a solvent-based or nonsolvent-based material such as a thermosetting resin or a light curing resin (for example, an ultraviolet curing type). More specifically, for example, Opstar manufactured from JSR Corporation (JN7102, with a refractive index of 1.68) is applicable as the material of the high refractive index layers and, for example, Opstar manufactured from JSR Corporation (JN7215, with a refractive index of 1.41) is applicable as the material of the low refractive index layers.

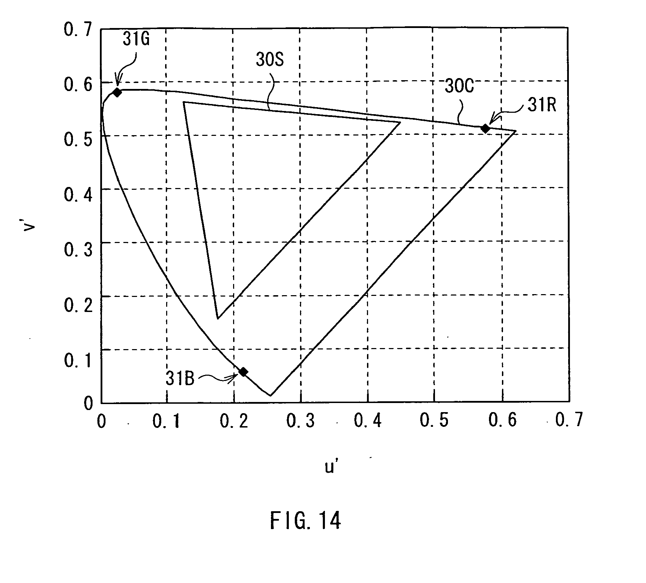

The color of light emitted from each light box 23 passes through such a wavelength selective filter 215 while reducing its spectrum width by such a wavelength selective filter 215. For example, when the colors of light with spectral characteristics illustrated in FIG. 13 (a red light spectrum LR0, a green light spectrum LG0 and blue light spectrum LBO) pass through the wavelength selective filter 215, the spectrum widths of the colors of light are reduced as in the case of a red light spectrum LR1, a green light spectrum LG1 and a blue light spectrum LB1. Thereby, for example, as illustrated in a chromaticity diagram (a u'-x' chromaticity diagram) in FIG. 14, the color purities of red light, green light and blue light which are emitted are improved, and their chromaticity points (chromaticity points 31 R, 31G and 31 B) are in a wider gamut than that in related art.

Thus, in the modification example, the wavelength selective filter 215 is arranged on the diffuser plate 213 on the emission surface S1 in each light box 24, so each of colors of light (red light, green light and blue light) emitted from corresponding single-color LEDs 211 is allowed to pass through the wavelength selective filter 215 while reducing its spectrum width, and the color purity of each of the colors of light emitted from the light boxes 24 is allowed to be improved. Therefore, the colors of light emitted from the light boxes 24 are allowed to be in a wider gamut than that in related art.

### [Modification Example 2]

Next, Modification Example 2 of the color-rendering index device of the invention will be described below. In addition, like components are denoted by like numerals as of the above-described embodiment and will not be further described.

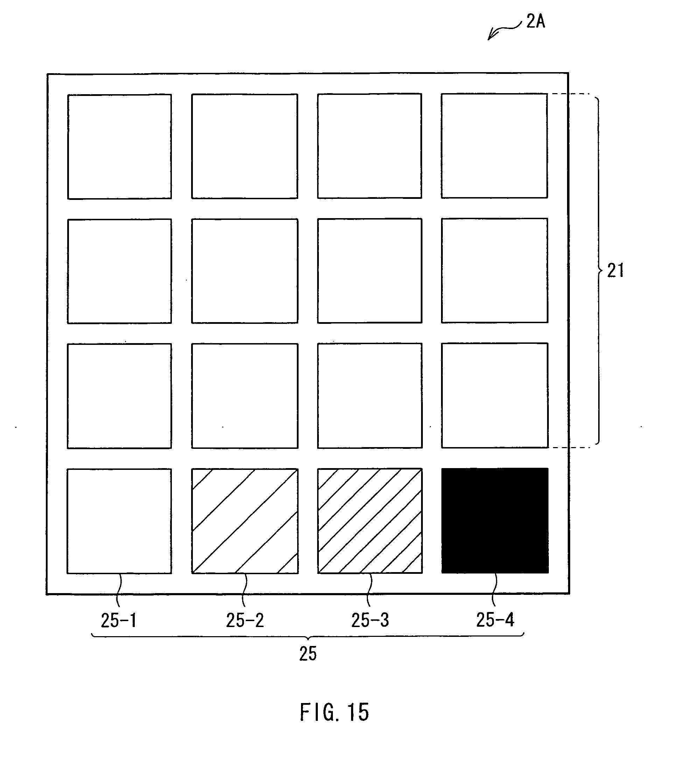

FIG. 15 illustrates a front configuration of a color-rendering index device (a color-rendering index device 2A) according to the modification example. In the color-rendering index device 2A, in addition to a plurality (in this case, 3 rows×4 columns=12) light boxes 21 emitting colors of light in wavelength regions corresponding to a plurality of colors as color standards in the color-rendering index device 2 of the embodiment, a plurality of (in this case, 1 row×4 columns=4) light boxes 25 (light boxes 25-1 to 25-4) emitting half-tone light (i.e. gray-scale light) with a plurality of luminance levels in a wavelength region corresponding to one color (in this case, with gray scales from white, through gray, to black) are further arranged below the light boxes 21. In addition, the light boxes 25 correspond to a specific example of "second light emission sections" in the invention.

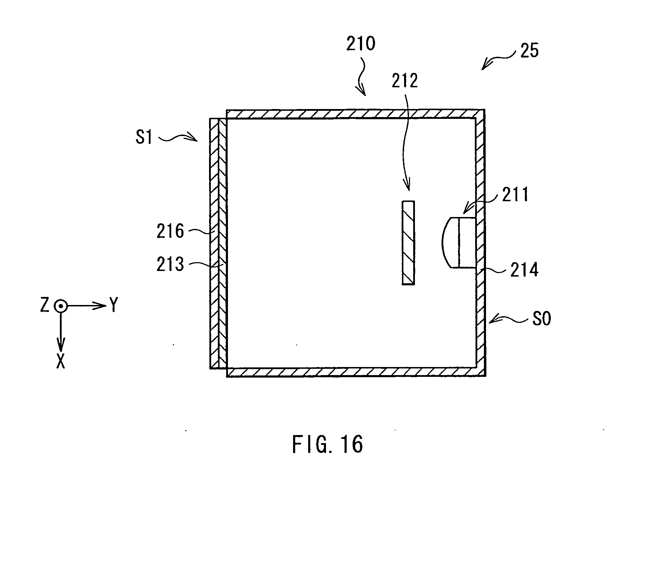

FIG. 16 illustrates a sectional configuration of the light box 25. The light box 25 further includes an ND filter 216 (a luminance adjustment filter) for adjusting the luminance level of half-tone light emitted from the single-color LED 211 on the diffuser plate 213 on the emission surface S1 in the light box 21 of the above-described embodiment.

The ND filter 216 attenuates incident light by reflecting or absorbing the incident light so as to adjust the luminance level of transmission light while maintaining wavelength characteristics (chromaticity). Moreover, the luminance level of the transmission light is adjustable by, for example, the thickness of the ND filter 216, or the layer number of unit filters in the ND filter 216. Therefore, the light boxes 25-1 to 25-4 of the modification example are configured so as to have different thicknesses of the ND filters 216, or different layer numbers of the unit filters in the ND filters 216.

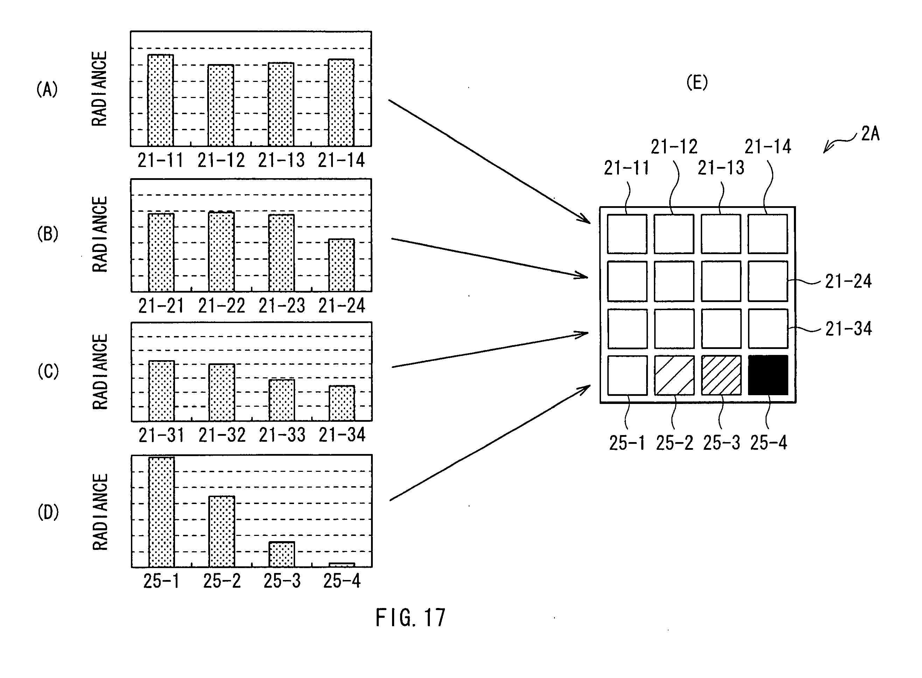

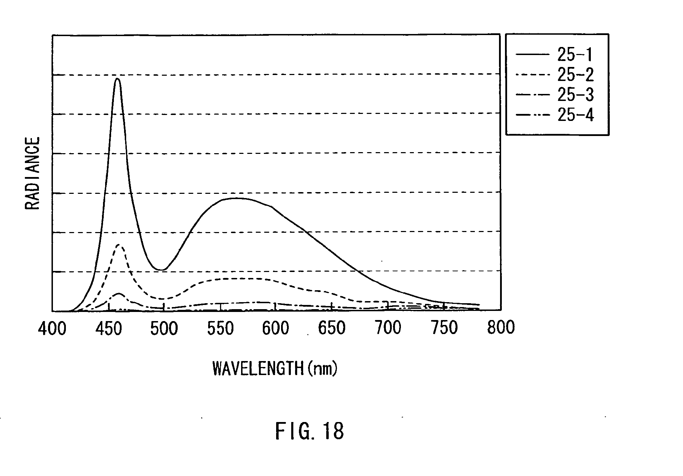

Thereby, as is evident from, for example, radiance characteristics illustrated in FIGs.17(D) and (E) or the emission spectral characteristics illustrated in FIG. 18, the luminance levels of half-tone light emitted from the light boxes 25-1 to 25-4 are different from one another. In addition, luminance measurement was performed by converting the RGB data D1 inputted from the camera 111 into color-difference data (the Y'C' data D2), and then measuring luminance (Y) with a waveform monitor using a spectral radiance meter. Moreover, the luminance level of half-tone light emitted from each of the light boxes 25-1 to 25-4 was measured after adjusting an aperture of the camera 111 so that the luminance of a white level became 700.

More specifically, FIGs. 17(A) to (D) illustrates radiance characteristics of emission light from each of the light boxes 21-11 to 21-14, 21-21 to 21-24, 21-31 to 21-34 and 25-1 to 25-4 in the color-rendering index device 2A illustrated in FIG. 17(E), and the luminance level ratios of half-tone light emitted from light boxes 25-1 to 25-4 are 100% (a white level), 30% (a gray level), 8% (a gray level) and 1.5% (a black level), respectively. According to FIGs.17(A) to (D), the luminance of the white level corresponding to the light box 25-1 is the highest, compared to the luminance of other colors of light, so when the aperture of the camera 111 is set to the luminance of the white level in the color data correction process described in the above-described embodiment, color saturation in other colors of light is prevented.

Moreover, it is obvious from the emission spectral characteristics of emission light from each of the light boxes 25-1 to 25-4 illustrated in FIG. 18 that while maintaining the wavelength characteristics (chromaticity) of each emission light, the ND filter 216 adjusts the luminance level depending on the thickness of the ND filter 216 or the layer number of the unit filters in the ND filter 216.

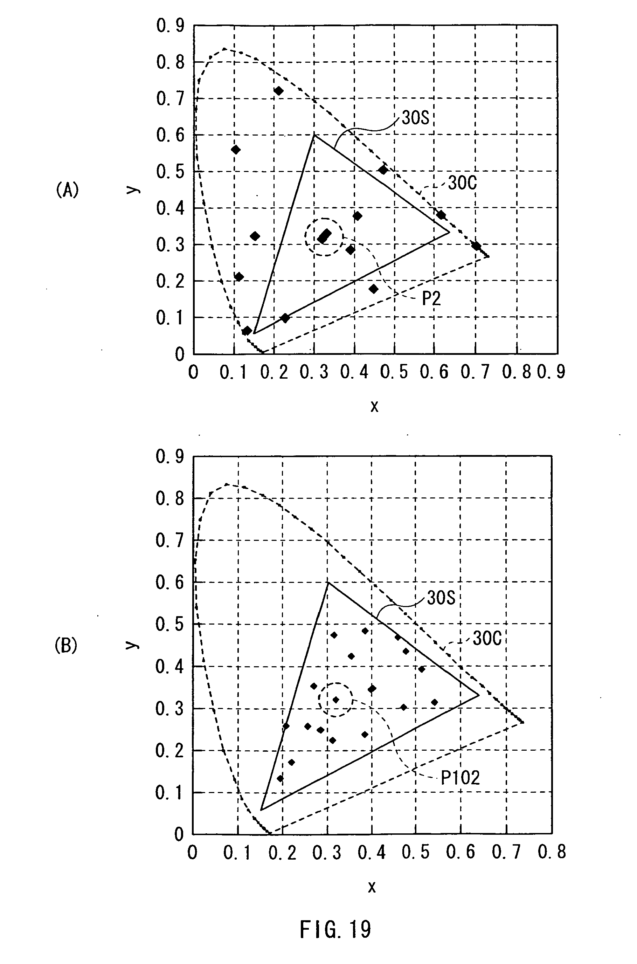

Further, it is obvious from a chromaticity diagram (an x-y chromaticity diagram) illustrated in FIG. 19(A) that chromaticity points P2 of emission light from the light boxes 25-1 to 25-4 are plotted at substantially the same position as a chromaticity point P102 of a color of light with gray scales (white-gray-black) in a modification example illustrated in FIG. 19(B) (corresponding to a pigment type color-rendering index device (a Macbeth chart) in related art), and the chromaticity points P2 of the emission light from the light boxes 25-1 to 25-4 with different luminance levels from one another are plotted at substantially the same position.

Thus, in the color-rendering index device 2A of the modification example, the light boxes 25 including the ND filter 216 (a luminance adjustment filter) are arranged, and by the ND filter 216, the luminance levels of half-tone light emitted from the light boxes 25-1 tot 25-4 are different from one another, so in addition to the effects in the above-described embodiment, the light boxes 21 are allowed to function as color standards for a plurality of colors, and the light boxes 25-1 to 25-4 are allowed to function as gray-scale standards for a plurality of luminance levels. Therefore, the color-rendering index device 2A of the modification example is applicable not only to evaluation of color reproduction characteristics described in the above-described embodiment, but also to evaluation of black-white gray-scale characteristics.

Moreover, the light sources of the light boxes 25 are configured of LEDs, so compared to the color-rendering index device (Macbeth chart) in related art, a gray-scale dynamic range (a luminance level range of white-gray-black) is allowed to be wider. Therefore, more appropriate evaluation of black-white gray-scale characteristics is allowed to be performed.

In addition, in the modification example, the case where the single-color LED 211 (single-color LEDs of white) is used as the light source in each of the light boxes 25 is described, but, for example, a plurality of single-color LEDs such as LEDs of red (R), green (G) and blue (B) may be used as such a light source, and colors of light from the plurality of single-color LEDs may be mixed to obtain white light.

Moreover, in the modification example, the case where the ND filter 216 is arranged on the diffuser plate 213 on the emission surface S1 is described, but the position where the ND filter 216 is arranged is not limited thereto, and the ND filter 216 may be arranged at any position in the light box 25.

Further, in the modification example, the case where four light boxes 25 (the light boxes 25-1 to 25-4) are arranged is described, but the number of light boxes 25 is not limited thereto. However, in consideration of the case where the color-rendering index device 2A of the modification example is applied to evaluation of black-white gray-scale characteristics, the number of the light boxes 25 is preferably 3 or more (3 or more gray-scale luminance levels).

Moreover, in the modification example, the case where the light boxes 25 are arranged below the light boxes 21 is described, but the positions where the light boxes 25 are arranged are not limited thereto, and for example, the light boxes 25 may be arranged above the light boxes 21.

Further, in the modification example, the case where the color-rendering index device 2A includes the light boxes 21 functioning as color standards for a plurality of colors and the light boxes 25 functioning as gray-scale standards for a plurality of luminance levels is described, but, for example, the color-rendering index device may include only the light boxes 25 functioning as gray-scale standards for a plurality of luminance levels.

Although the present invention is described referring to the embodiment and the example, the invention is not limited thereto, and may be variously modified. For example, in the above-described embodiment or the like, the case where the single-color light sources are configured of single-color LEDs is described, but, for example, any other single-color light sources such as lasers may be used.

Moreover, in the above-described embodiment or the like, the case where the number of a plurality of colors used as color standards is 12 is described, but the invention is not limited thereto, and the combination of colors is not limited thereto. In addition, the plurality of colors used as color standards preferably include, at minimum, red (R), green (G), blue (B), cyan (C), magenta (M) and yellow (Y). It is because a combination of such 6 colors or more constitutes a color chart allowing at least RGB which are necessary for additive color mixture and CMY which are necessary for subtractive color mixture to be evaluated.

## Claims

1. A color-rendering index device for providing color standards for a plurality of colors comprising a plurality of first light emission sections emitting colored light in wavelength ranges corresponding to the plurality of colors, the first light emission sections each including:
an enclosure having an emission surface;
a single-color light source arranged in the enclosure so as to face the emission surface and to emit the colored light;
a reflective sheet formed on end surfaces other than for the emission surface in the enclosure; and
a shielding plate arranged between the single-color light source and the emission surface so as to face the emission surface and to interrupt the colored light emitted from the single-color light source,
wherein the wavelength ranges of the colored light emitted from the first light emission sections correspond to different colors from one another.

2. The color-rendering index device according to claim 1, wherein
luminance variation, within the emission surface, in the colored light emitted from each of the first light emission sections is 5% or less.

3. The color-rendering index device according to claim 1, wherein
a diffuser plate diffusing the colored light is provided on the emission surface of the enclosure.

4. The color chart according to claim 1, wherein
a wavelength selective filter allowing the colored light emitted from each of the first light emission sections to pass there through while reducing spectrum width of the colored light is provided.

5. The color-rendering index device according to claim 1, wherein
the plurality of colors include, at least, red (R), green (G), blue (B), cyan (C), magenta (M) and yellow (Y).

6. The color-rendering index device according to claim 1, wherein
the single-color light source is a single-color light emitting diode.

7. The color-rendering index device according to claim 1, further comprising a plurality of second light emission sections each emitting half-tone light with one of a plurality of luminance levels in a wavelength range corresponding to one color, the second light emission sections each including:
the enclosure;
a light source arranged so as to face the emission surface in the enclosure, and emitting the half-tone light;
the reflective sheet;
a shielding plate arranged between the light source and the emission surface so as to face the emission surface and to interrupt the half-tone light emitted from the light source; and
a luminance adjustment filter for adjusting the luminance level of the half-tone light emitted from the light source,
wherein the luminance levels of the half-tone light emitted from the second light emission sections are different from one another.

8. The color-rendering index device according to claim 7, wherein
the luminance adjustment filters are different, in thickness, from one another among the second light emission sections.

9. The color-rendering index device according to claim 7, wherein
the luminance adjustment filter is configured of a plurality of unit filters, and
the unit filters are different, in layer number, from one another among the second light emission sections.

## Amended claims

### Amended claims under Art. 19.1 PCT

**1.** (Amended) A color-rendering index device for providing color standards for a plurality of colors comprising a plurality of first light emission sections arranged in a matrix form as a whole to emit colored light in wavelength ranges corresponding to the plurality of colors, the first light emission sections each including:
an enclosure having an emission surface;
a single-color light source arranged in the enclosure so as to face the emission surface and to emit the colored light;
a reflective sheet formed on end surfaces other than the emission surface in the enclosure; and
a shielding plate arranged between the single-color light source and the emission surface so as to face the emission surface and to interrupt the colored light emitted from the single-color light source,
wherein the wavelength ranges of the colored light emitted from the first light emission sections correspond to different colors from one another.

**2.** The color-rendering index device according to claim 1, wherein
luminance variation, within the emission surface, in the colored light emitted from each of the first light emission sections is 5% or less.

**3.** The color-rendering index device according to claim 1, wherein
a diffuser plate diffusing the colored light is provided on the emission surface of the enclosure.

**4.** The color chart according to claim 1, wherein
a wavelength selective filter allowing the colored light emitted from each of the first light emission sections to pass there through while reducing spectrum width of the colored light is provided.

**5.** The color-rendering index device according to claim 1, wherein
the plurality of colors include, at least, red (R), green (G), blue (B), cyan (C), magenta (M) and yellow (Y).

**6.** The color-rendering index device according to claim 1, wherein
the single-color light source is a single-color light emitting diode.

**7.** (Amended) The color-rendering index device according to claim 1, wherein
chromaticity points of the colored light emitted from the plurality of first light emission sections include chromaticity points plotted outside an sRBG gamut defined by IEC (International Electro-technical Commission).

**8.** (Amended) The color-rendering index device according to claim 1, wherein
the plurality of first light emission sections arranged in a matrix form are allowed to simultaneously emit the colored light in wavelength ranges corresponding to the plurality of colors as a single-colored light and/or a plurality of colored light.

**9.** (Amended) The color-rendering index device according to claim 1, further comprising a plurality of second light emission sections each emitting half-tone light with one of a plurality of luminance levels in a wavelength range corresponding to one color, the second light emission sections each including:
the enclosure;
a light source arranged so as to face the emission surface in the enclosure, and emitting the gray-scale light;
the reflective sheet;
a shielding plate arranged between the light source and the emission surface so as to face the emission surface and to interrupt the half-tone light emitted from the light source; and
a luminance adjustment filter for adjusting the luminance level of the half-tone light emitted from the light source,
wherein the luminance levels of the half-tone light emitted from the second light emission sections are different from one another.

**10.** (Added) The color-rendering index device according to claim 7, wherein
the luminance adjustment filters are different, in thickness, from one another among the second light emission sections.

**11.** (Added) The color-rendering index device according to claim 7, wherein
the luminance adjustment filter is configured of a plurality of unit filters, and
the unit filters are different, in layer number, from one another among the second light emission sections.
